# EUROPEAN PATENT SPECIFICATION

(11) **EP 3 868 620 B1**
(45) Date of publication and mention of the grant of the patent: **05.10.2022**
(21) Application number: 21158322.4
(22) Date of filing: 22.02.2021
(51) Int. Cl.: B60T 13/66, B60T 13/12

(54) **VEHICLE PROPELLED WITH A HYDROSTATIC DRIVE UNIT AND BRAKING METHOD**
MIT EINER HYDROSTATISCHEN ANTRIEBSEINHEIT ANGETRIEBENES FAHRZEUG UND BREMSVERFAHREN
VÉHICULE PROPULSÉ PAR UNE UNITÉ D'ENTRAÎNEMENT HYDROSTATIQUE ET PROCÉDÉ DE FREINAGE

(30) Priority: 21.02.2020 IT 202000003674
(43) Date of publication of application: 25.08.2021
(73) Proprietor: CNH Industrial Italia S.p.A., 10135 Torino (IT)
(72) Inventor: Garramone, Adriano, 73100 Lecce (IT); Girardi, Mario, 73100 Lecce (IT); Gravili, Andrea, 73100 Lecce (IT); Liberti, Stefano, 73100 Lecce (IT)
(74) Representative: CNH Industrial IP Department

(56) References cited:
- EP-A1- 3 581 823
- EP-A2- 3 211 141
- CN-A- 105 437 947
- DE-A1-102014 100 625
- US-A- 4 331 208
- US-A1- 2016 090 071

## Description

### . Field of invention

**.** The present invention relates a hydrostatically driven vehicle having an emergency braking system.

**.** The present invention also relates to an emergency braking method particularly suitable for vehicles propelled by a hydrostatic drive unit, such as agricultural vehicles.

### . Prior art

**.** Vehicles propelled by a hydrostatic drive unit, such as agricoltural vehicles, are often required to operate off-road in uneven topographies, such as rocky and/or marshy soil and in some cases in local slopes or local depressions, and are required to lift, transport and unload heavy loads, such as for example a bulk of soil, a mass of stones, cutgrass, and the like as the case may require.

. Document EP 3 581 823 A1 discloses a vehicle propelled by a hydrostatic drive unit. Usually, such a vehicle comprises an internal combustion engine that activates a variable-displacement pump to provide pressurized oil along the transmission conduits. Then, at wheels, the hydraulic power (pressure) is converted to mechanical power. The amount of hydrostatic pressure generated by the pump determines the amount of torque applied to each wheel by the hydrostatic motor. In a typical arrangement, the oil for hydrostatically transmitting the motor power can alternatively act in the opposite direction, thereby being able to exert a motor braking action.

**.** Generally, the service braking action is activated by the user of a vehicle to decrease the speed or to stop the vehicle. In some hydrostatically driven vehicles, the motor brake sets in when the service braking controller, such as the brake pedal is pressed by a user, thereby the motor brake acts as service brake.

**.** Differently, the parking braking action typically ensure the parking position of the vehicle and it is controlled by a specific hand lever provided at the dashboard of the vehicle. In hydrostatically driven vehicles, the parking brake may be pneumatically activated, in other words an elastic element biases the brake towards the braking position and a pressurized gas resists the elastic bias, thereby in case of failure of the gas supply, the parking brake results automatically activated.

**.** It is also known to supply the service braking action with the parking braking action as auxiliary supply in case of failure of the service braking transmission chain. In this case, the parking brake system is triggered usually by an electronic controller, which automatically sets in when emergency is detected. The parking brake controller, for example a hand lever, is however provided for activating the parking braking action in operative conditions.

**.** Known pneumatic valve systems for supply an emergency brake system of a heavy duty vehicle are shown for example in documents US-3650568 and US-3982792.

**.** Also, document DE-4315877 discloses a solution wherein the brake force of the auxiliary brake is directly proportional to the operating travel covered by the brake pedal, upon activation of the auxiliary brake. A further solution of emergency parking brake is shown in JP-2012-006423. For example, document US-9145114 shows an emergency brake electronic control logic based on the input detected by a rotational speed sensor at the wheel.

**.** Despite designed for applications in commercial vehicles such as truck trailers, document WO-2019-015762 discloses a method for braking a vehicle having mechanical transmission, namely a trailer provided with pneumatic parking brake, wherein the parking brake does not assist the service brake if the brake pedal is not depressed enough, thereby relying for stopping the truck trailer on the residual braking torque of the service brake system, even in case of failure thereof.

**.** The known solutions as mentioned above require frequent activation of the mechanical braking systems either disc brake or drum brake that in turn generates friction and heat, particularly when vehicles made heavy by the load they are carrying, thereby reducing the performance of the brakes, which is particularly undesirable during emergency such as failure of the service brake.

**.** For example, document US-2018-072292 discloses a controller able to downshift to a lower gear in emergency conditions in response to the degree of application of the brake pedal. Such a solution however does not solve the problem and simply shifts the issue of friction to the transmission organs such a clutch.

**.** On the other hand, in a typical arrangement of the driver cabin of a vehicle propelled by a hydrostatic drive unit, at or near the dashboard there is a joystick designed to accelerate the vehicle speed when operated, a service brake pedal to exert a service braking action and a hand-lever for activating the parking brake. However, such a plurality of specifically designed controls provided in such a vehicle may confuse the driver and delay the response of the operator in emergency conditions. It is also worth noting that agricultural vehicles may carry a heavy load, and because of the high masses and inertias involved reducing also the safety of the area surrounding the vehicle.

**.** It is strongly felt the need of improving the comfort of an operator in the event of failure of the service braking system of a vehicle propelled by a hydrostatic drive unit, without for this reason compromising the safety of the operator and of the vehicle.

**.** At the same time, it is felt the need of providing an emergency braking system of swift response on a hydrostatically driven vehicle, without for this reason providing a decreased comfort for an operator.

### . Solution

**.** It is a scope of the present invention to overcome the drawbacks mentioned with reference to the known art and providing a solution to the needs reported above.

**.** These and other scopes are achieved by a vehicle according to claim **1,** as well as a method according to claim **6.**

**.** Thanks to the proposed solutions, the comfort of a user of the hydrostatically driven vehicle is enhanced in respect to known solutions.

**.** Thanks to the proposed solutions, it is reduced the number of control interfaces for activating any braking action.

**.** Thanks to the proposed solutions, a hydrostatictransmission vehicle may be equipped with emergency braking systems having an intuitive control thereby increasing the safety of the vehicle, of the user and of the surroundings.

### . Figures

**.** Further characteristics and advantages of the invention will appear from the following description of preferred embodiments, given by way of non-limiting examples, with reference to the attached figures, wherein:

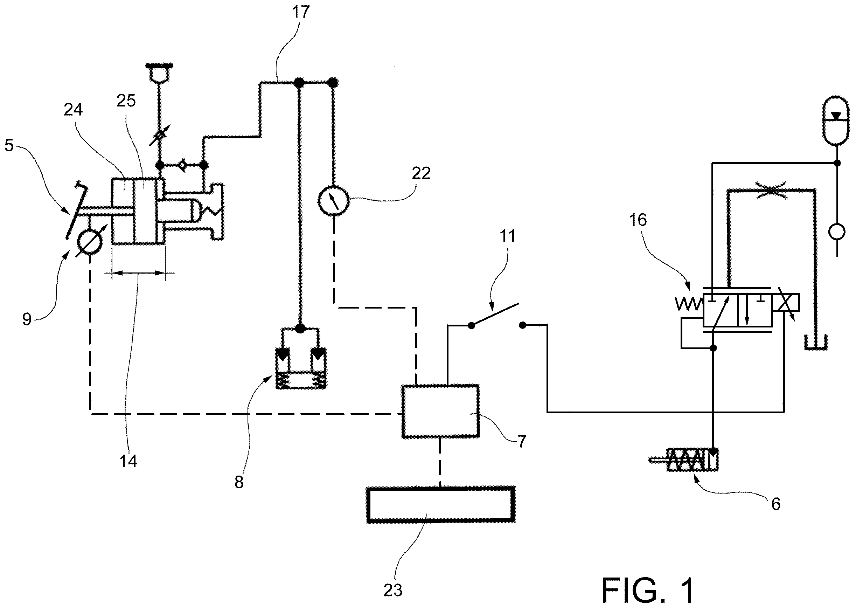

- figure 1 is a block diagram that diagrammatically represents a vehicle, according to an embodiment;

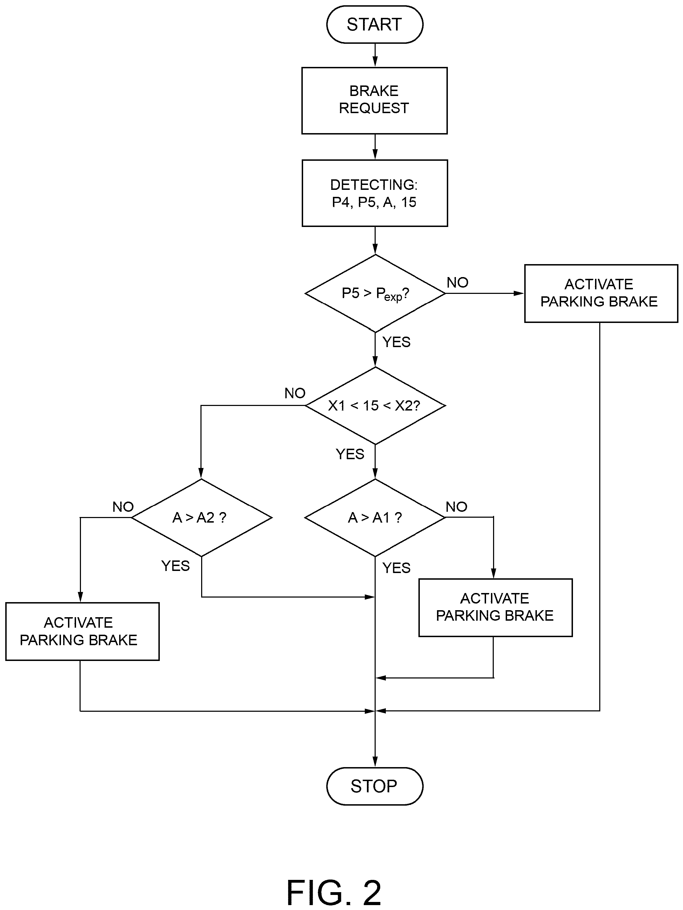

- figure 2 is a block diagram that diagrammatically represents a method, according to an operating mode;

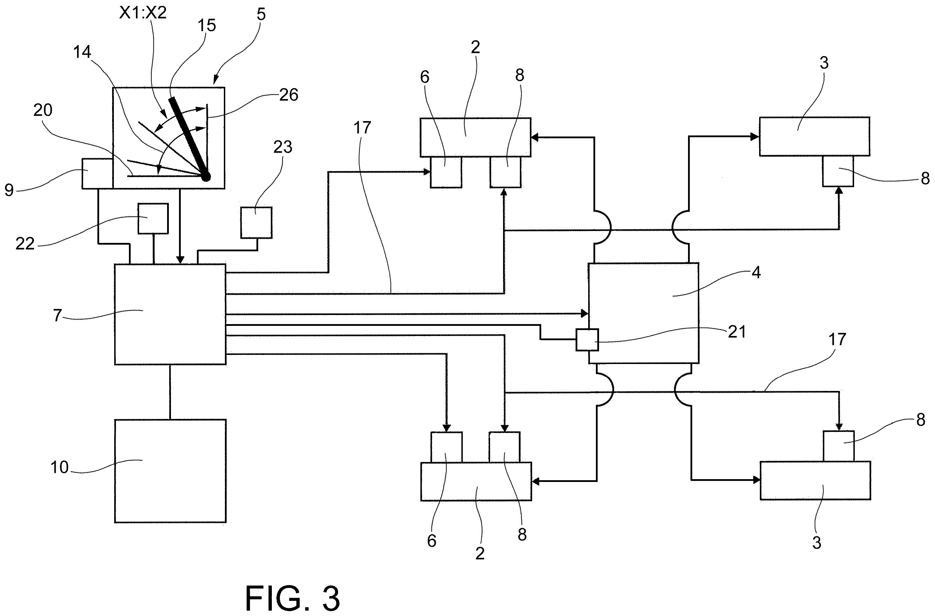

- figure 3 is a block diagram that diagrammatically represents a top view of vehicle, according to an embodiment;

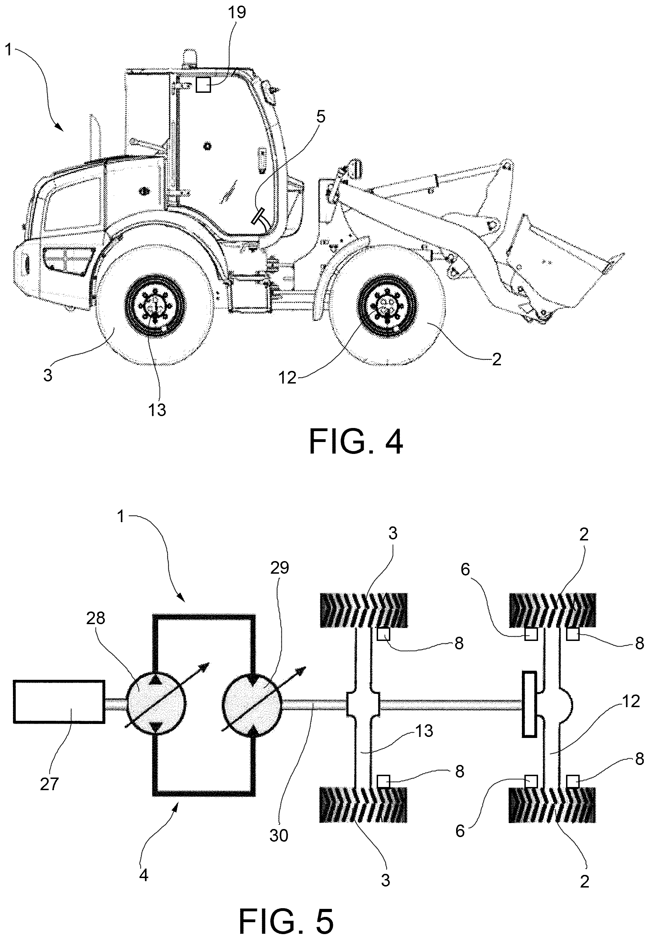

- figure 4 is an elevation side view, showing a vehicle according to an embodiment;
- figure 5 is a top view that represents diagrammatically a vehicle, according to an embodiment.

### . Detailed description of some embodiments

**.** According to a general embodiment, a hydrostatically driven vehicle 1 is provided. Said vehicle 1 is propelled by a hydrostatic drive unit 4. For example, said vehicle 1 is an agricultural vehicle 1 suitable for travel on agricultural grounds. For example, said vehicle 1 is a soil-shifting vehicle 1, or an earth-moving vehicle 1, i.e. a machine 1 suitable for moving an amount of soil material, such as stones and/or sand and/or the like. For example, said vehicle 1 is an excavator 1 having a pivotable operator cabin 18, preferably pivotable about a vertical axis of the vehicle 1.

**.** Said hydrostatically driven vehicle 1 has at least one ground contact unit 2, 3, for example at least one wheel 2 or 3 and preferably a plurality of wheels connected to at least one vehicle axle 12 or 13. According to an embodiment, said at least one ground contact unit 2, 3 comprises at least one endless track system, thereby the hydrostatically driven vehicle 1 is a tracked vehicle.

**.** Said hydrostatically driven vehicle 1 comprises a hydrostatic drive unit 4, operatively connected to said at least one ground contact unit 2, 3. The hydrostatic drive unit 4 is suitable for propelling the vehicle 1 and is also suitable for working as a motor brake for exerting a motor braking action. For example, the hydrostatic drive unit 4 is operatively connected to a device at or near the wheels able to convert the hydrostatic power, such as pressure, to mechanical motor power propelling the vehicle 1; preferably, the same hydrostatic drive unit 4 is also able to work/flow in the reverse way thereby exerting a motor braking action on the hydrostatically driven vehicle 1.

**.** According to an embodiment, said hydrostatic drive unit 4 is associated to an internal combustion engine 27, which is suitable for activating said drive unit 4. According to a preferred embodiment, said hydrostatic drive unit 4 comprises a hydrostatic or hydraulic pump 28 and a hydrostatic or hydraulic motor 29 operatively connected to each other. According to an embodiment, a hydrostatic transmission system 30 is associated downstream to said hydrostatic drive unit 4 for transmitting hydrostatic load (i.e. pressure) at the ground contact units 2, 3, which in turn are provided with transducer means adapted to convert the hydrostatic power transmitted by the hydrostatic transmission 30 into mechanical power. The hydrostatic transmission system 30 may comprise flexible and/or rigid conduits.

**.** Said hydrostatically driven vehicle 1 comprises a service brake user interface 5, suitable for receiving a service braking request from a user of the vehicle 1. For example, the braking request is a manual action applied to said service brake user interface 5. More preferably, said service brake user interface 5 is a brake pedal 5, and the braking request is a user's action applied thereto.

**.** Advantageously, said service brake user interface 5 is operatively connected to said hydrostatic drive unit 4 to exert said motor braking action as service braking action. In this way, the service braking request may be met by means of activation of the motor brake only. Thereby, it is reduced the wear due to frictional contact among the components of the service brake, such as the friction material of disc brake pads and/or drum brake shoes.

**.** Said hydrostatically driven vehicle 1 further comprises at least one parking brake actuator 6, suitable for exerting a parking braking action on the vehicle 1. For example, said at least one parking brake actuator 6 comprises a parking brake caliper straddling at least one brake disc, at least one parking brake pad having friction material, and thrust means for urging the friction material of the brake pad against a braking brand of the associated at least one brake disc.

**.** Advantageously, said hydrostatically driven vehicle 1 comprises an electronic control unit 7. Said electronic control unit 7 is designed for computing information about the status of the service braking action in order to detect a failure of the service braking action. For example, the service braking action failure detection is performed by means of detecting a failure in the operative connection between the service brake user interface 5 and the hydrostatic drive unit 4.

**.** With further advantage, said at least one parking brake actuator 6 is operatively connected to said electronic control unit 7. Said electronic control unit 7 is designed for automatically activating said at least one parking brake actuator 6 as a response to the service braking request when said failure of the service braking action is detected. Thereby, said at least one parking brake actuator 6 acts as emergency brake supply for the hydrostatically driven vehicle 1.

**.** Thanks to such a hydrostatically driven vehicle 1, it is made possible to reduce the number of manual controls within the operator cabin 18 of the hydrostatically driven vehicle 1.

**.** According to a preferred embodiment, said operator cabin 18 is thereby devoid of a hand lever specifically designed for controlling the parking braking action. In other words, thanks to the proposed solutions, the vehicle 1 avoids to comprise a parking brake hand-lever. In this way, the comfort of the operator, for example the driver, is enhanced in respect of known solutions particularly in emergency conditions when a failure of the service braking action have been detected.

**.** According to an embodiment, an alarm 19 is provided for within the operator cabin 18 to inform the operator, for example the driver, of the detected failure of the service braking action.

**.** According to a preferred embodiment, said service brake user interface 5 is a lever having a travel stroke 14, so that the service braking request depends on the position of said lever within said travel stroke 14. According to a preferred embodiment, said service brake user interface 5 is a brake pedal lever. According to a preferred embodiment, said travel stroke 14 is an angular stroke, extending along an angular direction. According to an embodiment, said travel stroke 14 is a linear stroke extending along a substantially rectilinear direction. According to a preferred embodiment, said service brake user interface 5 is a slider.

**.** According to a preferred embodiment, said electronic control unit 7 is operatively connected to at least one first sensor 9 suitable for detecting the current position 15 of the service brake user interface 5, for example a lever 5, within the travel stroke 14, with the purpose of computing the service braking request. Thereby, said electronic control unit 7 is designed for acquiring information about the current position 15 of the brake pedal 5 detected by said at least one first sensor 9. According to an embodiment, said at least one first sensor 9 detects the current angular position 15 of the lever 5, for example the pedal 5, in respect of a predefined reference position 26.

**.** According to a preferred embodiment, said electronic control unit 7 comprises a memory 10 storing information about an expected service braking action as a function of a plurality of predetermined positions of the service brake user interface 5, for example said pedal 5, within the travel stroke 14, with the purpose of computing information about the status of the service braking action in order to detect a failure of the service braking action.

**.** According to a preferred embodiment, said electronic control unit 7 comprises at least one switch 11, at the operative connection to said at least one parking brake actuator 6, with the purpose of activating the parking braking action.

**.** According to a preferred embodiment, said parking brake actuator 6 does comprise a parking brake having friction material adapted to be spring applied to and hydraulically released. In other words, said parking brake caliper is of the type spring applied hydraulically released, or "SAHR". In this way the safety is enhanced as in case of failure of the electric circuits the vehicle exerts the parking braking action automatically. According to a preferred embodiment, said parking brake actuator 6 is associated to a proportional pressure reducing valve 16, suitable for modulating the activation of the hydraulic release of the spring applied parking brake. Thereby, the emergency braking supply is provided for incrementally, for example as a function of the traveled stroke of the brake pedal.

**.** According to a preferred embodiment, said vehicle 1 also comprises at least one further service brake actuator 8, preferably a frictional service brake actuator 8. Said service brake user interface 5 is operatively connected to said further service brake actuator 8 to exert said service braking action as a response to the braking request. An operative connection 17, for example one or more brake fluid conduits 17, is preferably provided operatively connecting the service brake user interface 5 to the service brake actuator 8.

**.** The service brake and the parking brake may be the same but with different actuators.

**.** Thanks to such a hydrostatically driven vehicle 1, the service braking action may be exerted by means of the motor brake provided by said hydrostatic drive unit 4 and/or by means of the service brake actuator 8 and the parking braking action may be exerted by means of a parking brake 6 that is spring actuated and hydraulically released, wherein all said braking actions are triggered through a user command operated at the service brake user interface 5.

**.** According to an embodiment, said electronic control unit 7 further comprises at least one second sensor 22, or leak sensor 22, suitable for detecting the current pressure P5 downstream the brake pedal 5, preferably within the brake fluid conduit 17 operatively connected to the brake pedal 5 in order to verify the integrity of the brake fluid conduit 17. The memory 10 of the control unit 7 may store the value of the expected pressure Pexp within said brake fluid conduit 17. Thereby, the control unit 7 is able to compare the detected current service brake hydraulic pressure P5 with the expected pressure Pexp. Preferably, said pressure sensor 22 is provided inside the brake fluid conduit 17 and/or at the inner wall of the brake fluid conduit 17.

**.** According to an embodiment, downstream said brake pedal 5 is provided a master cylinder 24 and a piston 25 slidable within the master cylinder 24 along a piston travel stroke 14, wherein the piston 25 is moved by said brake pedal 5. According to an embodiment, said first sensor 9 detects the travel stroke of said piston 25 slidably associated to the master cylinder 24 downstream the brake pedal 5.

**.** According to an embodiment, said electronic control unit 7 further comprises at least one third speed sensor 23, or deceleration sensor 23, suitable for detecting the speed of the vehicle 1, or the acceleration of the vehicle 1. Preferably, said second sensor 23 detects the current deceleration A of the hydrostatically driven vehicle 1, or the current speed of the hydrostatically driven vehicle 1 and the said electronic control unit 7 calculates the current deceleration A with the purpose of detecting a failure of the service braking action. The memory 10 of the control unit 7 may store the value of the expected deceleration of the hydrostatically driven vehicle 1 for a set of predefined values of the brake pedal 5 position within the travel stroke 14. Thereby, the control unit 7 is able to compare the computed current deceleration A with the expected deceleration of the vehicle 1 at the current position 15 of the brake pedal 5 within the travel stroke 14.

**.** According to an embodiment, said vehicle 1 further comprises at least one fourth sensor 21, or hydrostatic drive pressure sensor 21, suitable for detecting the current hydrostatic load [i.e. hydrostatic pressure] P4 of the working fluid within the hydrostatic drive unit 4 of the vehicle 1, with the purpose of detecting a failure within the hydrostatic drive unit 4. The hydrostatic drive pressure sensor 21 may be provided in the hydrostatic transmission of hydrostatic power to the wheels. The hydrostatic transmission may comprise flexible conduits.

**.** According to an embodiment, said vehicle 1 comprises at least one front axle 12 comprising at least one front wheel 2, and at least one rear axle 13 comprising at least one rear wheel 3, wherein said at least one parking brake actuator 6 is operatively associated to said at least one front axle 2 of the vehicle 1. Thereby, said at least one parking brake caliper 6 is associated to said at least one front wheel 2 of the vehicle 1.

**.** A method of exerting a braking action will be described in the following.

**.** A method for exerting a braking action in order to slow and/or to stop a hydrostatically driven vehicle 1 comprises the step of requesting a service braking action. This step is performed by operating a service brake user interface 5, for example a service brake pedal.

**.** The method comprises the step of exerting a motor braking action, as service braking action. Thereby, the response to the service braking request is given by the motor braking action.

**.** The method comprises the steps of detecting a failure in said service braking action, and automatically exerting a parking braking action as emergency braking supply. Thereby, in case of emergency, when failure in the service braking action is detected, the method prescribes to activate the parking braking action to respond the service braking request.

**.** According to an operating mode, the method comprises the step of activating said at least one further service brake actuator 8, with the purpose of meeting said service braking request.

**.** According to a preferred operating mode, the method comprises also the steps of detecting the current position 15 of the user interface 5, for example the brake pedal 5, within said travel stroke 14, for example an angular travel stroke 14. This step of detecting is preferably carried out by said first sensor 9.

**.** According to an operating mode, the method comprises the step of determining an expected braking action as a function of the current position 15 of the service brake pedal 5 within the travel stroke 14. This step of determining is preferably carried out by means of an electronic control unit 7.

**.** According to an operating mode, the method comprises the further step of comparing the detected current pedal position 15 within the travel stroke 14 with a predefined range X1:X2 of pedal positions.

**.** Thereby, if the detected current pedal position 15 falls within said predefined range X1:X2 of pedal positions, then the method comprises the step of activating only the motor braking action as the unique contributor to the service braking action. Thereby, if the detected current pedal position 15 falls out of said predefined range X1:X2 of pedal positions, then the method comprises the step of activating said at least one further service brake actuator 8, with the purpose of exerting said service braking action. Preferably, a first limit X1 of said range is a inching start angle, and a second limit X2 is a inching end angle.

**.** According to an operating mode, the method comprises the further step of correcting the service braking action by means of modulating the activation of the parking braking action, with the purpose of meeting said braking request. This step is preferably controlled by said electronic control unit 7, which provides a corrective action by means of automatic progressive activation of the at least one parking brake actuator 6. A proportional pressure reducing electro-valve 16 controlled by said electronic control unit 7 may be provided with the purpose of controlling the parking brake hydraulic pressure to be applied against the spring actuating the parking brake 6 in order to modulating the contribution of the parking braking action to the service braking action to meet the service braking request.

**.** According to a preferred operating mode, the method comprises the further step of detecting the hydrostatic pressure P4 within the hydrostatic drive unit 4.

**.** According to an operating mode, the method comprises the further step of detecting a current service brake hydraulic pressure P5 within the brake fluid conduit 17, and comparing the detected current service brake hydraulic pressure P5 with an expected value of hydraulic pressure Pexp. Thereby, if the detected current service brake hydraulic pressure P5 is below an expected value of hydraulic pressure Pexp, then the method comprises the step of automatically activating said parking braking action, as emergency braking supply. This step of comparing is preferably controlled by said electronic control unit 7.

**.** According to an operating mode, the method comprises the further step of detecting or computing the current deceleration A of the vehicle 1. Preferably, this step of detecting or computing the current deceleration is performed right after the step of comparing the detected current pedal position 15 within the travel stroke 14 with a predefined range X1:X2 of pedal positions. Thereby, if the detected current pedal position 15 falls within said predefined range X1:X2 of pedal positions and therefore the service braking action is carried out exclusively by the motor brake, then the method comprises the step of comparing the detected or computed current deceleration A of the vehicle 1 with a first expected deceleration of the vehicle A1 at the current hydrostatic pressure P4 within the hydrostatic drive unit 4.

**.** Said first expected deceleration of the vehicle A1 is preferably stored in said memory 10 as a function of a set of values of said hydrostatically drive unit pressure P4, and corresponds to the expected deceleration when the service braking action is carried out by means of activating only the motor brake, and avoiding to activate said further service brake actuator 8. Then, if the detected current deceleration A of the vehicle 1 is equal to or minor than the first expected deceleration of the vehicle A1, then the method comprises the step of activating said parking braking action, as emergency supply.

**.** According to an operating mode, if the detected current pedal position 15 falls out of said predefined range X1:X2 of pedal positions therefore the service braking action is carried out by both the motor brake and the further service brake actuator 8, then the method comprises the step of comparing the detected or computed current deceleration A of the vehicle 1 with a second expected deceleration of the vehicle A2 at the current hydrostatic pressure P4 within the hydrostatic drive unit 4.

**.** Said second expected deceleration of the vehicle A2 is preferably stored in said memory 10 as a function of a set of values of said hydrostatically drive unit pressure P4, and corresponds to the expected deceleration of the vehicle 1 when the service braking action is carried out by means of activating both the motor brake and said further service brake actuator 8. Then, if the detected current deceleration A of the vehicle 1 is equal to or minor than the second expected deceleration of the vehicle A2, then the method comprises the step of activating said parking braking action, as emergency braking supply.

**.** According to an operating mode, the method comprises the step of storing information in the control unit 7. The step of storing information may be carried out by storing set of expected values of hydraulic pressure Pexp. The step of storing information may be carried out by storing a set of expected values of first acceleration A1. The step of storing information may be carried out by storing a set of expected values of second acceleration A2.

**.** According to an operating mode, the following steps are provided in succession according to the order reported in the following:
- firstly, requesting a service braking action;
- then exerting a motor braking action, as service braking action;
- then, detecting a failure in said service braking action, and automatically exerting a parking braking action as emergency braking supply.

**.** According to a preferred operating mode, the step of detecting a failure comprises the following sub-steps, provided sequentially according to the order reported in the following:
- firstly, detecting the current pedal brake position within the travel stroke, and detecting the current service brake hydraulic pressure P5 within the service brake fluid conduit 17, and detecting the current vehicle deceleration A, and detecting the current hydrostatic pressure P4 within the hydrostatic drive unit 4;
- then, comparing the detected current service brake hydraulic pressure P5 with an expected value of hydraulic pressure Pexp; thereby, if the detected current service brake hydraulic pressure P5 is below an expected value of hydraulic pressure Pexp, then the method comprises the step of automatically activating said parking braking action, as emergency braking supply; else, if the detected current service brake hydraulic pressure P5 is equal to or greater than the expected value of hydraulic pressure Pexp, then the method comprises the following further step of:
- comparing the detected current pedal position 15 within the travel stroke 14 with a predefined range X1:X2 of pedal positions; thereby, if the detected current pedal position 15 falls within said predefined range X1:X2 of pedal positions, then the method comprises the step of comparing the current detected deceleration A with said first expected deceleration A1 of the vehicle 1, and if the current detected deceleration A is equal to or minor than said first expected deceleration A1, then the method comprises the step of automatically activating said parking brake as emergency service brake supply; else if the detected current pedal position 15 falls out of said predefined range X1:X2 of pedal positions, then the method comprises the step of comparing the current detected deceleration A with said second expected deceleration A2 of the vehicle 1, and if the current detected deceleration A is equal to or minor than said second expected deceleration A2, then the method comprises the step of automatically activating said parking brake as emergency service brake supply.

**.** By virtue of the features described above provided either separately or jointly in particular embodiments, it is possible to satisfy the above mentioned needs achieving the above cited advantages, and in particular:
- the cabin 18 of the vehicle 1 propelled by a hydrostatic drive unit 4 may have only one brake user interface 5, such as a brake pedal, avoiding to provide additional brake user interface like a hand-lever for controlling the parking braking action; thereby, the operator, such as the driver of the vehicle 1, does have to operate with a single pedal to control any braking action, even in emergency conditions;
- that allows a swift response of the driver, and therefore of the vehicle 1, in case of failure of the service brake;
- failure of the service brake can be detected at any one of the following cases: failure of the hydraulic brake conduit 17, such as a leak in the service brake fluid; failure at the further service brake actuator 8, such as over-worn friction material; failure of the hydrostatically driven motor brake;
- longer life for the components of the further service brake actuator 8 due to less use keeping equal the exerted braking action, thus less wear;
- the control panel in the cabin 18 can be made less expensive as it is reduced the number of brake user interfaces to only one;
- at the same time, the encumber of the brake user interface can be made smaller, resulting in an increased volume of free space for accommodating the driver within the cabin 18, keeping equal the size of the cabin;
- an improved comfort for the driver is achieved both due to a smaller brake user interface and to a single brake user interface;
- it is allowed an improved degree of safety for the operator, such as the driver, for the vehicle, and for the surroundings of the vehicle, particularly in case of agricultural vehicle or soil-shifting machine carrying a heavy load thereby causing high inertia.

.

**LIST OF REFERENCES**

| | |
|---|---|
| 1 | Hydrostatically driven vehicle, or hydrostatically propelled vehicle |
| 2 | Ground contact unit, or front wheel |
| 3 | Ground contact unit, or rear wheel |
| 4 | Hydrostatic drive unit |
| 5 | Service brake user interface, or brake pedal |
| 6 | Parking brake actuator |
| 7 | Electronic control unit |
| 8 | Further service brake actuator |
| 9 | First sensor, or service brake or brake pedal position sensor |
| 10 | Memory of the control unit |
| 11 | Switch of the control unit, parking braking activation switch |
| 12 | Front axle |
| 13 | Rear axle |
| 14 | Brake Travel stroke |
| 15 | Detected current position of the service brake user interface, or of the brake pedal |
| 16 | Valve |
| 17 | Brake fluid conduit |
| 18 | Cabin |
| 19 | Alarm |
| 20 | Brake End stroke |
| 21 | Hydrostatic drive unit pressure sensor, or fourth sensor |
| 22 | Second sensor, or brake fluid pressure sensor |
| 23 | Third sensor, or vehicle speed/deceleration sensor |
| 24 | Master brake cylinder |
| 25 | Brake Piston |
| 26 | Reference position |
| 27 | Engine |
| 28 | Hydrostatic or hydraulic pump of the drive unit |
| 29 | Hydrostatic or hydraulic motor of the drive unit |
| 30 | Hydrostatic or hydraulic transmission |
| P4 | Detected current hydrostatic pressure of the hydrostatic drive unit |
| P5 | Detected current service brake hydraulic pressure of the brake fluid |
| Pexp | Expected hydraulic pressure of the brake fluid |
| A | Detected or computed current deceleration |
| A1 | First expected deceleration |
| A2 | Second expected deceleration |

## Claims

1. Hydrostatically driven vehicle (1) having at least one ground contact unit (2, 3), comprising:
- a hydrostatic drive unit (4), operatively connected to said at least one ground contact unit (2, 3), suitable for propelling the vehicle (1) and for working as a motor brake for exerting a motor braking action;
- a service brake user interface (5), suitable for receiving a braking request from a user of the vehicle (1);
- at least one parking brake actuator (6), suitable for exerting a parking braking action;
- an electronic control unit (7);
**characterised in that**
- said service brake user interface (5) is operatively connected to said hydrostatic drive unit (4) to exert said motor braking action as service braking action;
- said electronic control unit (7) is designed for computing information about the status of the service braking action in order to detect a failure of the service braking action;
- said at least one parking brake actuator (6) is operatively connected to said electronic control unit (7);
- said electronic control unit (7) is designed for automatically activating said at least one parking brake actuator (6) as a response to the braking request when said failure of the service braking action is detected, thereby said at least one parking brake actuator (6) acts as emergency brake supply for the hydrostatically driven vehicle (1) .

2. Vehicle (1) according to claim **1,** wherein said service brake user interface (5) is a brake pedal (5) having a travel stroke (14), so that the service braking request depends on the position of said brake pedal (5) within said travel stroke (14); wherein preferably:
- said electronic control unit (7) is operatively connected to at least one first sensor (9) suitable for detecting the current position (15) of the brake pedal (5) within the travel stroke (14) with the purpose of computing the service braking request, thereby said electronic control unit (7) is designed for acquiring information about the detected current position (15) of the brake pedal (5).

3. Vehicle (1) according to claim **1** or **2,** comprising at least one hydrostatic drive pressure sensor (21), suitable for detecting the current hydrostatic pressure (P4) of a working fluid within the hydrostatic drive unit (4) of the vehicle (1), with the purpose of detecting a failure within the hydrostatic drive unit (4).

4. Vehicle (1) according to any one of the preceding claims, wherein said parking brake actuator (6) comprises a parking brake having friction material adapted to be spring applied to and hydraulically released, so that said parking brake is of the type spring applied hydraulically released; wherein preferably:
- said parking brake actuator (6) is associated to a proportional pressure reducing valve (16), suitable for modulating the activation of the hydraulic release of said spring applied parking brake.

5. Vehicle (1) according to any one of the preceding claims, comprising at least one further service brake actuator (8), wherein
- said service brake user interface (5) is operatively connected to said further service brake actuator (8) to exert said service braking action as a response to the braking request.

6. A method for exerting a braking action in order to slow and/or to stop a hydrostatically driven vehicle (1) comprises the following steps:
- requesting a service braking action;
- exerting a motor braking action, as service braking action;
- detecting a failure in said service braking action, and automatically exerting a parking braking action as emergency braking supply.

7. Method according to claim **6,** comprising the further step of:
- detecting the hydrostatic pressure (P4) of a working fluid within the hydrostatic drive unit (4), with the purpose of detecting a failure in the service braking action.

8. Method according to claim **6** or **7,** wherein said step of requesting is carried out by operating a brake pedal (5);
and wherein the method comprises the further steps of:
- detecting the current pedal position (15) of the brake pedal (5) within said travel stroke (14).

9. Method according to claim **8,** comprising the further step of:
- determining an expected braking action as a function of the detected current position (15) of service brake pedal (5) within the travel stroke (14).

10. Method according to any one of claim **9,** wherein:
- if the detected current pedal position (15) falls within said predefined range (X1:X2) of pedal positions, then method comprises the step of:
- exerting said service braking action exclusively by activating the motor brake;
or:
- if the detected current pedal position (15) falls within said predefined range (X1:X2) of pedal positions, then method comprises the step of:
- activating a further service brake actuator (8).

11. Method according to any one of claims from **6** to **10,** comprising the further step of:
- correcting the service braking action by means of modulating the activation of the parking braking action, with the purpose of meeting said braking request.

12. Method according any one of claims from **6** to **11,** wherein the method steps are provided in succession according to the order reported in the following:
- firstly, requesting a service braking action;
- then exerting a motor braking action, as service braking action;
- then, detecting a failure in said service braking action, and automatically exerting a parking braking action as emergency braking action;
wherein the step of detecting a failure comprises the following sub-steps, provided sequentially according to the order reported in the following:
- firstly, detecting the current pedal brake position within the travel stroke, and detecting the current service brake hydraulic pressure (P5) within the service brake fluid conduit (17), and detecting the current vehicle deceleration (A), and detecting the current hydrostatic pressure (P4) within the hydrostatic drive unit (4);
- then, comparing the detected current service brake hydraulic pressure (P5) with an expected value of hydraulic pressure (Pexp);
- if the detected current service brake hydraulic pressure (P5) is below an expected value of service brake hydraulic pressure (Pexp), then the method comprises said step of automatically activating said parking braking action, as emergency braking supply;
or:
- if the detected current service brake hydraulic pressure (P5) is equal to or greater than the expected value of hydraulic pressure (Pexp), then the method comprises the following further step of:
- comparing the detected current pedal position (15) within the travel stroke (14) with a predefined range (X1:X2) of pedal positions;
- if the detected current pedal position (15) falls within said predefined range (X1:X2) of pedal positions, then the method comprises the step of:
- comparing the current detected deceleration (A) with said first expected deceleration (A1) of the vehicle (1); and
- if the current detected deceleration (A) is equal to or minor than said first expected deceleration (A1), then the method comprises the step of:
- automatically activating said parking brake as emergency service brake supply;
or:
- if the detected current pedal position (15) falls out of said predefined range (X1:X2) of pedal positions, then the method comprises the step of:
- comparing the current detected deceleration A with said second expected deceleration (A2) of the vehicle (1), and
- if the current detected deceleration (A) is equal to or minor than said second expected deceleration (A2), then the method comprises said step of:
- automatically activating said parking brake as emergency service brake supply.

## Patentansprüche

1. Hydrostatisch angetriebenes Fahrzeug (1) mit mindestens einer Bodenkontakteinheit (2, 3), das aufweist:
- eine hydrostatische Antriebseinheit (4), die wirksam mit der mindestens einen Bodenkontakteinheit (2, 3) verbunden ist, die dazu geeignet ist, das Fahrzeug (1) anzutreiben und als eine Motorbremse zur Ausübung einer Motorbremsbetätigung zu arbeiten;
- eine Fahrbremsen-Benutzerschnittstelle (5), die geeignet ist, eine Bremsanfrage von einem Benutzer des Fahrzeugs (1) empfangen;
- mindestens einen Parkbremsaktor (6), der zum Ausüben einer Parkbremsbetätigung geeignet ist;
- eine elektronische Steuereinheit (7);
**dadurch gekennzeichnet, dass**
- die Fahrbremsen-Benutzerschnittstelle (5) wirksam mit der hydrostatischen Antriebseinheit (4) verbunden ist, um die Motorbremsbetätigung als Fahrbremsbetätigung auszuüben;
- die elektronische Steuereinheit (7) zum Berechnen von Daten über den Status der Fahrbremsbetätigung vorgesehen ist, um einen Fehler der Fahrbremsbetätigung zu erfassen;
- der mindestens eine Parkbremsaktor (6) wirksam mit der elektronischen Steuereinheit (7) verbunden ist;
- die elektronische Steuereinheit (7) dazu vorgesehen ist, den mindestens einen Parkbremsaktor (6) als eine Antwort auf die Bremsanfrage automatisch zu aktivieren, wenn der Fehler der Fahrbremsbetätigung erfasst wird, wodurch der mindestens eine Parkbremsaktor (6) als Notbremsversorgung für das hydrostatische angetriebene Fahrzeug (1) dient.

2. Fahrzeug (1) nach Anspruch 1, wobei die Fahrbremsen-Benutzerschnittstelle (5) ein Bremspedal (5) ist, das einen Arbeitshub (14) aufweist, so dass die Fahrbremsanfrage von der Stellung des Bremspedals (5) innerhalb des Arbeitshubs (14) abhängt; wobei vorzugsweise:
- die elektronische Steuereinheit (7) wirksam mit mindestens einem ersten Sensor (9) verbunden ist, der zum Erfassen der aktuellen Stellung (15) des Bremspedals (5) innerhalb des Arbeitshubs (14) geeignet ist mit dem Ziel, die Fahrbremsanfrage zu berechnen, wodurch die elektronische Steuereinheit (7) dazu vorgesehen ist, Daten über die erfasste aktuelle Stellung (15) des Bremspedals (5) zu ermitteln.

3. Fahrzeug (1) nach Anspruch 1 oder 2, das mindestens einen hydrostatischen Antriebsdrucksensor (21) aufweist, der dazu vorgesehen ist, den aktuellen hydrostatischen Druck (P4) eines Arbeitsfluids innerhalb der hydrostatischen Antriebseinheit (4) des Fahrzeugs (1) zu erfassen, mit dem Ziel einen Fehler innerhalb der hydrostatischen Antriebseinheit (4) zu erfassen.

4. Fahrzeug (1) nach einem der vorhergehenden Ansprüche, wobei der Parkbremsaktor (6) eine Parkbremse mit einem Reibbelag aufweist, der dazu eingerichtet ist, federvorgespannt und hydraulisch freigegeben zu werden, wodurch die Parkbremse vom Typ federvorgespannt und hydraulisch freigebbar ist; wobei vorzugsweise:
- der Parkbremsaktor (6) mit einem proportionalen Druckminderungsventil (16) verbunden ist, das dazu eingerichtet ist, die Betätigung der hydraulischen Freigabe der federvorgespannten Parkbremse zu modulieren.

5. Fahrzeug (1) nach einem der vorhergehenden Ansprüche, das mindestens einen weiteren Fahrbremsaktor (8) aufweist, wobei:
- die Fahrbremsen-Benutzerschnittstelle (5) wirksam mit dem weiteren Fahrbremsaktor (8) verbunden ist, um die Fahrbremswirkung als eine Antwort auf die Bremsanfrage auszuüben.

6. Verfahren zum Ausüben einer Bremswirkung, um ein hydrostatisch angetriebenes Fahrzeug (1) zu verlangsamen und/oder anzuhalten, wobei das Verfahren folgende Schritte aufweist:
- Anfragen einer Fahrbremswirkung;
- Ausüben einer Motorbremswirkung als Fahrbremswirkung;
- Erfassen eines Fehlers in der Fahrbremswirkung, und automatisches Ausüben einer Parkbremswirkung als Notbremsversorgung.

7. Verfahren nach Anspruch 6, das den weiteren folgenden Schritt aufweist:
- Erfassen des hydrostatischen Drucks (P 4) eines Arbeitfluids innerhalb der hydrostatischen Antriebseinheit (4) mit dem Ziel, einen Fehler in der Fahrbremswirkung zu erfassen.

8. Verfahren nach Anspruch 6 oder 7, wobei der Schritt des Anforderns durch Betätigen eines Bremspedals (5) durchgeführt wird; und wobei das Verfahren weiterhin den folgenden Schritt aufweist:
- Erfassen der aktuellen Pedalstellung (15) des Bremspedals (5) innerhalb des Arbeitshubs (14).

9. Verfahren nach Anspruch 8, das den folgenden weiteren Schritt aufweist:
- Bestimmen einer erwarteten Bremsbetätigung als eine Funktion der erfassten aktuellen Stellung (15) des Fahrbremspedals (5) innerhalb des Arbeitshubs (14).

10. Verfahren nach Anspruch 9, wobei:
- wenn die erfasste aktuelle Pedalstellung (15) innerhalb eines vordefinierten Bereichs (X1:X2) von Pedalstellungen fällt, dann weist das Verfahren folgenden Schritte auf:
- Ausüben der Fahrbremsbetätigung ausschließlich durch Betätigen der Motorbremse; oder
- wenn die erfasste aktuelle Pedalstellung (15) innerhalb des vorbestimmten Bereichs (X1:X2) von Pedalstellungen fällt, dann weist das Verfahren folgenden Schritt auf:
- Betätigen eines weiteren Fahrbremsaktors (8).

11. Verfahren nach einem der Ansprüche 6 bis 10, das den weiteren Schritt aufweist:
- Korrigieren der Fahrbremsbetätigung durch Modulieren der Betätigung der Parkbremswirkung mit dem Ziel, der Bremsanfrage nachzukommen.

12. Verfahren nach einem der Ansprüche 6 bis 11, wobei die Verfahrensschritte in der Reihenfolge vorgesehen sind, wie im Folgenden beschrieben:
- zuerst Anfordern einer Fahrbremsbetätigung;
- anschließend Ausüben einer Motorbremsbetätigung als Fahrbremsbetätigung;
- dann Erfassen eines Fehlers in der Fahrbrembetätigung, und automatisches Ausüben einer Parkbremsbetätigung als Notbremsbetätigung;
wobei der Schritt des Erfassens eines Fehlers die folgenden Unterschritte aufweist, die sequenziell gemäß der nachfolgenden Reihenfolge vorgesehen sind:
- zunächst Erfassen der aktuellen Bremspedalstellung innerhalb des Arbeitshubs und Erfassen des aktuellen Farbbrems-Hydraulikdrucks (P5) innerhalb der Fahrbrems-Fluidleitung (17), und Erfassen der aktuellen Fahrzeugverlangsamung (A), und Erfassen des aktuellen hydrostatischen Drucks (P4) innerhalb der hydrostatischen Antriebseinheit (4);
- anschließend Vergleichen des erfassten aktuellen Fahrbrems-Hydraulikdrucks (P5) mit einem erwarteten Wert des Hydraulikdrucks (Pexp);
- wenn der erfasste aktuelle Fahrbrems-Hydraulikdruck (P 5) unter einem erwarteten Wert des Fahrbrems-Hydraulikdrucks (Pexp) liegt, dann umfasst das Verfahren den Schritt des automatischen Betätigens der Parkbremsbetätigung als Notbremsversorgung;
oder:
- wenn der erfasste aktuelle Fahrbrems-Hydraulikdruck (P 5) größer oder gleich dem erwarteten Wert des Hydraulikdrucks (Pexp) ist, dann weist das Verfahren den nachfolgenden weiteren Schritt auf:
- Vergleichen der erfassten aktuellen Pedalstellung (15) innerhalb des Arbeitshubs (14) mit einem vordefinierten Bereich (X1: X2) der Pedalstellungen;
- wenn die erfasste aktuelle Pedalstellung (15) innerhalb des vordefinierten Bereichs (X1:X2) an Pedalstellungen fällt, dann weist das Verfahren den folgenden Schritt auf:
- Vergleichen der aktuellen erfassten Verlangsamung (A) mit der ersten erwarteten Verlangsamung (A1) des Fahrzeugs (1); und
- wenn die aktuelle erfasste Verlangsamung (A) kleiner oder gleich als die erste erwartete Verlangsamung (A 1) ist, dann weist das Verfahren folgenden Schritt auf:
- automatisches Betätigen der Parkbremse als Not-Fahrbremsversorgung;
oder:
- wenn die erfasste aktuelle Pedalstellung (15) außerhalb des vordefinierten Bereichs (X1:X2) an Pedalstellungen fällt, dann weist das Verfahren folgenden Schritt auf:
- Vergleichen der aktuellen erfassten Verlangsamung A mit der zweiten erfassten Verlangsamung (A2) des Fahrzeugs (1) und
- wenn die aktuelle erfasste Verlangsamung (A) kleiner oder gleich als die zweite erwartete Verlangsamung (A 2) ist, dann weist das Verfahren folgenden Schritt auf:
- automatisches Betätigen der Parkbremse als Not-Fahrbremsversorgung.

## Revendications

1. Véhicule à entraînement hydrostatique (1) ayant au moins une unité de contact au sol (2, 3), comprenant :
- une unité d'entraînement hydrostatique (4), reliée de manière fonctionnelle à ladite au moins une unité de contact au sol (2, 3), adaptée pour propulser le véhicule (1) et pour fonctionner comme un frein moteur pour exercer une action de freinage du moteur ;
- une interface utilisateur du frein de service (5), adaptée pour recevoir une demande de freinage d'un utilisateur du véhicule (1) ;
- au moins un actionneur de frein de stationnement (6), adapté pour exercer une action de freinage de stationnement ;
- une unité de commande électronique (7) ;
**caractérisé en ce que**
- ladite interface utilisateur du frein de service (5) est reliée de manière fonctionnelle à ladite unité d'entraînement hydrostatique (4) pour exercer ladite action de freinage du moteur comme action de freinage de service ;
- ladite unité de commande électronique (7) est conçue pour calculer des informations sur le statut de l'action de freinage de service pour détecter une défaillance de l'action de freinage de service ;
- ledit au moins un actionneur de frein de stationnement (6) est relié de manière fonctionnelle à ladite unité de commande électronique (7) ;
- ladite unité de commande électronique (7) est conçue pour activer automatiquement ledit au moins un actionneur de frein de stationnement (6) comme une réponse à la demande de freinage lorsque ladite défaillance de l'action de freinage de service est détectée, de sorte que ledit au moins un actionneur de frein de stationnement (6) agit comme alimentation de frein d'urgence pour le véhicule à entraînement hydrostatique (1).

2. Véhicule (1) selon la revendication 1, dans lequel ladite interface utilisateur du frein de service (5) est une pédale de frein (5) ayant une course de déplacement (14), de sorte que la demande de freinage de service dépend de la position de ladite pédale de frein (5) dans ladite course de déplacement (14) ; dans lequel, de préférence :
- ladite unité de commande électronique (7) est reliée de manière fonctionnelle à au moins un premier capteur (9) adapté pour détecter la position actuelle (15) de la pédale de frein (5) dans la course de déplacement (14) dans le but de calculer la demande de freinage de service, de sorte que ladite unité de commande électronique (7) est conçue pour obtenir des informations sur la position actuelle détectée (15) de la pédale de frein (5).

3. Véhicule (1) selon la revendication 1 ou 2, comprenant au moins un capteur de pression d'entraînement hydrostatique (21), adapté pour détecter la pression hydrostatique actuelle (P4) d'un fluide de travail dans l'unité d'entraînement hydrostatique (4) du véhicule (1), dans le but de détecter une défaillance dans l'unité d'entraînement hydrostatique (4).

4. Véhicule (1) selon l'une quelconque des revendications précédentes, dans lequel ledit actionneur de frein de stationnement (6) comprend un frein de stationnement ayant un matériau de friction adapté pour être appliqué par ressort et relâché hydrauliquement, de sorte que ledit frein de stationnement est du type appliqué par ressort et relâché hydrauliquement ; dans lequel de préférence :
- ledit actionneur de frein de stationnement (6) est associé à une soupape de réduction de pression proportionnelle (16), adaptée pour la modulation de l'activation du relâchement hydraulique dudit frein de stationnement appliqué par ressort.

5. Véhicule (1) selon l'une quelconque des revendications précédentes, comprenant au moins un actionneur de frein de service supplémentaire (8), dans lequel
- ladite interface utilisateur du frein de service (5) est reliée de manière fonctionnelle audit actionneur de frein de service supplémentaire (8) pour exercer ladite action de freinage de service comme réponse à la demande de freinage.

6. Procédé pour exercer une action de freinage afin de ralentir et/ou d'arrêter un véhicule à entraînement hydrostatique (1) comprenant les étapes suivantes :
- demander une action de freinage de service ;
- exercer une action de freinage du moteur, comme action de freinage de service ;
- détecter une défaillance dans ladite action de freinage de service, et exercer automatiquement une action de freinage de stationnement comme alimentation de freinage d'urgence.

7. Procédé selon la revendication 6, comprenant l'étape supplémentaire consistant à :
- détecter la pression hydrostatique (P4) d'un fluide de travail dans l'unité d'entraînement hydrostatique (4), dans le but de détecter une défaillance dans l'action de freinage de service.

8. Procédé selon la revendication 6 ou 7, dans lequel ladite étape de demande est effectuée en actionnant une pédale de frein (5) ; et dans lequel le procédé comprend les étapes supplémentaires consistant à :
- détecter la position de pédale actuelle (15) de la pédale de frein (5) dans ladite course de déplacement (14).

9. Procédé selon la revendication 8, comprenant l'étape supplémentaire consistant à :
- déterminer une action de freinage attendue en fonction de la position actuelle détectée (15) de la pédale de frein de service (5) dans la course de déplacement (14).

10. Procédé selon la revendication 9, dans lequel :
- si la position actuelle détectée de la pédale (15) tombe dans ladite plage prédéfinie (X1:X2) des positions de la pédale, alors le procédé comprend l'étape consistant à :
- exercer ladite action de freinage de service exclusivement en activant le frein moteur ; ou :
- si la position actuelle détectée de la pédale (15) tombe dans ladite plage prédéfinie (X1:X2) des positions de la pédale, alors le procédé comprend l'étape consistant à :
- activer un actionneur supplémentaire de frein de service (8) .

11. Procédé selon l'une quelconque des revendications 6 à 10, comprenant l'étape supplémentaire consistant à :
- corriger l'action de freinage de service au moyen de la modulation de l'activation de l'action de freinage de stationnement, dans le but de répondre à ladite demande de freinage.

12. Procédé selon l'une quelconque des revendications 6 à 11, dans lequel les étapes du procédé sont fournies successivement selon l'ordre indiqué dans ce qui suit :
- premièrement, demander une action de freinage de service ;
- ensuite, exercer une action de freinage du moteur, comme action de freinage de service ;
- ensuite, détecter une défaillance dans ladite action de freinage de service, et exercer automatiquement une action de freinage de stationnement comme action de freinage d'urgence ;
dans lequel l'étape consistant à détecter une défaillance comprend les sous-étapes suivantes, fournies de manière séquentielle selon l'ordre indiqué dans ce qui suit :
- premièrement, détecter la position actuelle de la pédale de frein dans la course de déplacement, et détecter la pression hydraulique de frein de service actuelle (P5) dans la conduite de liquide de frein de service (17), et détecter la décélération actuelle du véhicule (A), et détecter la pression hydrostatique actuelle (P4) à l'intérieur de l'unité d'entraînement hydrostatique (4) ;
- ensuite, comparer la pression hydraulique de frein de service actuelle détectée (P5) avec une valeur attendue de la pression hydraulique (Pexp) ;
- si la pression hydraulique de frein de service actuelle détectée (P5) est inférieure à une valeur attendue de pression hydraulique de frein de service (Pexp), alors le procédé comprend ladite étape d'activation automatique de ladite action de freinage de stationnement, comme alimentation de freinage d'urgence ;
ou :
- si la pression hydraulique de frein de service actuelle détectée (P5) est égale ou supérieure à la valeur attendue de pression hydraulique (Pexp), alors le procédé comprend l'étape supplémentaire suivante consistant à :
- comparer la position actuelle détectée de la pédale (15) dans la course de déplacement (14) avec une plage prédéfinie (X1:X2) des positions de la pédale ;
- si la position actuelle détectée de la pédale (15) tombe dans ladite plate prédéfinie (X1:X2) des positions de la pédale, alors le procédé comprend l'étape consistant à :
- comparer la décélération actuelle détectée (A) à ladite première décélération attendue (Al) du véhicule (1) ; et
- si la décélération actuelle détectée (A) est égale ou inférieure à ladite première décélération attendue (Al), alors le procédé comprend l'étape consistant à :
- activer automatiquement ledit frein de stationnement comme alimentation de frein de service d'urgence ;
ou :
- si la position actuelle détectée de la pédale (15) ne tombe pas dans ladite plage prédéfinie (X1:X2) des positions de la pédale, alors le procédé comprend l'étape consistant à :
- comparer la décélération actuelle détectée A à ladite seconde décélération attendue (A2) du véhicule (1), et
- si la décélération détectée actuelle (A) est égale ou inférieure à ladite seconde décélération attendue (A2), alors le procédé comprend ladite étape consistant à :
- activer automatiquement ledit frein de stationnement comme alimentation de frein de service d'urgence.
